# EUROPEAN PATENT APPLICATION

(11) **EP 3 646 997 A2**
(43) Date of publication of application: **06.05.2020**
(21) Application number: 19382020.6
(22) Date of filing: 14.01.2019
(51) Int. Cl.: B25J 9/16

(54) **EMBEDDED OPEN ROBOT CONTROLLER AND ROBOT CONTROL METHOD EMPLOYING SAME**

(30) Priority: 12.09.2018 WO PCT/ES2018/070596
(71) Applicant: Erle Robotics, S.L., 01006 Vitoria-Gasteiz (ES)
(72) Inventor: MUÑIZ ROSAS, ADAY, 01006 VITORIA-GASTEIZ (ES); IBÁÑEZ BURGOS, CARLOS, 01006 VITORIA-GASTEIZ (ES); RECIO HERRERO, IGOR, 01006 VITORIA-GASTEIZ (ES); MAYORAL VILCHES, VÍCTOR, 01006 VITORIA-GASTEIZ (ES); ZAMALLOA UGARTE, IRATI, 01006 VITORIA-GASTEIZ (ES); MUGURUZA GOENAGA, IÑIGO, 01006 VITORIA-GASTEIZ (ES)

(57) **Abstract**

The present invention relates to a device for controlling a robot or robot control system (i.e. robot controller) of small dimensions (22 x 120 x 67 mm). Despite its small dimensions, the disclosed device is furnished with essential hardware and software implementations to make it suitable to act as controller of robot apparatuses of different kinds. Additionally, the present invention serves to provide an open architecture for robot control. Safety and security-related issues are also implemented in the disclosed embedded open robot controller (eORC). Finally, the present invention provides a robot control method employing the eORC.

## Description

### Technical Field

The present invention relates to the field of robot control systems and methods and more concretely to embedded systems comprising capacities for robot control.

### Background Art

On one hand, methods and systems for controlling robots usually include an apparatus, the robot controller, that provides end-users with the tools needed to manage the motion of an automatized device (e.g. a robotic arm manipulator). Such apparatus is usually of big dimensions, expensive to get and maintain, and its employment restricted to a closed series of robots, generally determined by the manufacturer. Without controller, end-users not familiar with programming languages may not be able to handle the robot, thereby vendor lock-ins are favored in this respect.

On the other hand, modern web-based services provide a kind way of programming robots but neglect some important aspects in robotics such as security (e.g. privacy of communications, integrity of messages, etc.) or synchrony between system (i.e. the robot) and control system, what is a key feature in applications in the need of real-time responses, thereby compromising critical issues such as safety. Moreover, a system 100% hosted in the cloud is a 100% Internet-dependent system, thereby subject to mundane failures such as server downs or hacker attacks.

Therefore, there is a big need to provide handy, flexible solutions for managing robotic systems of different kinds while minding security, safety and synchrony aspects at the same time.

### Summary of invention

The present invention provides a robot control system embedded in a tiny device. Despite its small dimensions, the disclosed device is furnished with essential hardware and software implementations to make it suitable to act as controller of robot apparatuses of different kinds. Thanks to its handy, flexible design, the embedded open robot controller (eORC) may be easily integrated in already functioning robotic systems. Therefore, traditional heavy industrial robot controllers might be replaced by a much more convenient device, thereby leveraging integration tasks. Moreover, different to said industrial computers, an embedded device is much cheaper to develop, improve and replace given its simplified electronics.

Additionally, the present invention serves to provide an open architecture for robot control by implementing abstracted hardware and software interfaces to interact with varied robotic systems, so that an easy management of a plurality of robot resources (including individual robot components) is achieved while maintaining same programming logic. Therefore, most cumbersome integration tasks may be reduced in great extent by simply plugging in a tiny device to a robotic system. Therefore, the open robot controller is not restricted to a closed list of robotic systems, being upgradable to a plurality of them by simply adjusting some specific ad-hoc hardware designs.

Additionally, safety and security-related issues are implemented in the disclosed embedded open robot controller by means of dedicated hardware modules (e.g. a dedicated co-processor, I/O connectors, etc.) and specialized programmed routines (e.g. employing the TSN protocol), thereby providing basic requirements for its employment as industrial or commercial tool, being this solution second to none in any functionality usually ascribed to traditional robot controllers.

Finally, the present invention provides a robot control method employing the embedded open robot controller (eORC) disclosed herein. Such control method takes into account different deployment particularities (e.g. processing capabilities dedicated to a series of critical tasks) of the embedded robot controller. Therefore, the present invention is intended as an integral disclosure providing different, co-related improvements in robotics.

### Brief description of drawings

Following drawings have been provided intended to be an integral part of the description and to aids towards a better understanding of the different embodiments disclosed therein:
Figure 1 is a plan view of a motherboard comprising a series of basic electronics for the design of an embedded robot controller.
Figure 2 is a schematic representation of a software and hardware architecture for the implementation of an open robot controller.
Figure 3A is a first exemplary representation of a small casing comprising the embedded open robot controller, wherein external communication ports are visible.
Figure 3B is a view of Fig. 3A from the opposite side.
Figure 3C is a representation of the open controller of Fig. 3A, wherein dimensions of the controller are indicated for reference.
Figure 3D is a second exemplary representation of a small casing comprising the embedded open robot controller, wherein external communication ports are visible.
Figure 3E is a view of Fig. 3D from the opposite side.
Figure 3F is a representation of the open controller of Fig. 3D, wherein dimensions of the controller are indicated for reference.
Figure 4 is a flow diagram of a method for controlling a robot, the method characterized by comprising the employment of the embedded open robot controller.
Figure 5 is a schematic representation of the architecture of a motion generation system that provides a series of plug-ins.
Figure 6 is a schematic representation of a series of cyclic routines employing real-time capabilities executed in the controller.

### Description of embodiments

The present invention relates to a device for controlling a robot or robot control system (i.e. robot controller) of small dimensions (22 x 120 x 67 mm).

According to different embodiments disclosed herein, said robot controller may be reduced in an embedded system (e.g. system on chip, system in package, etc.), therefore the first great improvement provided by this invention is that a robot user may control, by means of this embedded controller, a robotic device without having to resort to a traditional robot controller, whose size usually is at least as big as the size of a desktop tower of a personal computer device.

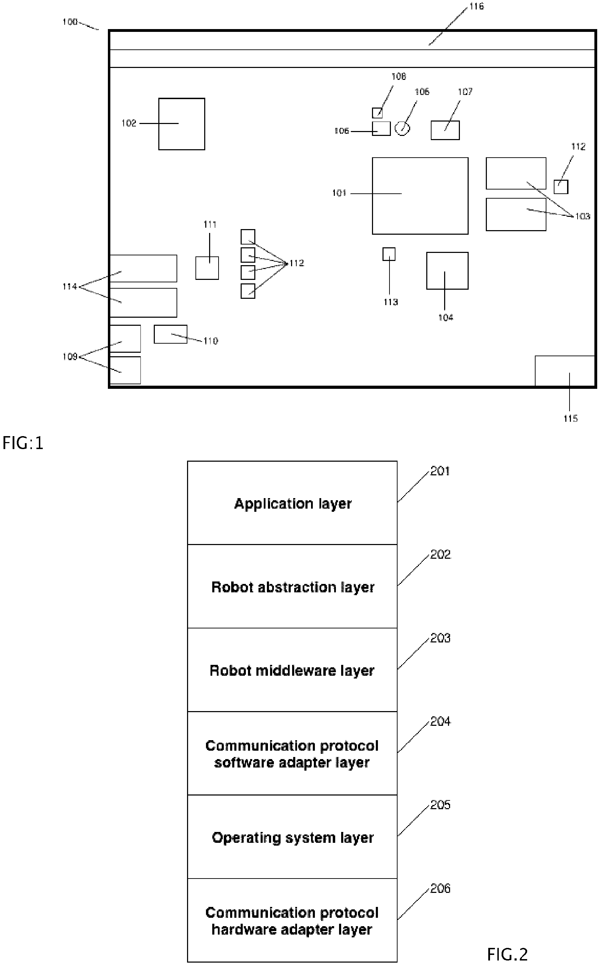

To provide a description of the specifications of an exemplary embedded open robot controller (eORC) as the proposed by the present invention, references are firstly made to Fig. 1, wherein a plan view of a motherboard (100) comprising a set of electronics is represented, being said electronics intended to feature the minimum required to implement the present invention.

In no case shall the concept design proposed in Fig. 1 be considered as limiting. Those skilled in the art will understand that the proposed design is not restrictive of the scope of the invention but one of many feasible embodiments thereof.

Thus, the disclosed embedded open robot controller may comprise, furnished on a motherboard (100): a processor (101), a co-processor (102), RAM memory chips (103), a Flash memory chip (104), a BIOS battery (105), a BIOS configuration EEPROM (106), a boot memory (107), a real-time clock (108), power supply connectors (109), a switch (110), a power module (111), low-dropout regulators (112), a cryptoprocessor (113), communication ports (114), a wireless module (115) and input/output connections (116). The rationale and function of some of these elements are deeply discussed hereinafter.

In the processor (101), main computer instructions for communicating with the motor drivers acting over the joints of the robotic device may be executed. Additionally, a graphical user interface for interacting with the system (e.g. giving commands, following wizard instructions, programming routines, etc.) may be also executed in this processor (101). Additionally, the processor (101) may be in charge of the communications among the rest of the components of the system, such as a co-processor (102), RAM memory chips (103), a remote server (e.g. where the motion generator is hosted), a local robotic system (i.e. the robot), a cryptoprocessor (113), etc.

Additionally, the processor (101) may comprise a dedicated interruption pin managed by a co-processor (102). Exemplarily, this interruption pin may run a safety stop routine as soon as the co-processor (102) triggers a safety stop request (e.g. reduce speed). According to different embodiments, part of the processing capacity of the processor may be reserved to the continuous check of the trigger of this kind of inputs.

In the processor (101) a background operating system may also be run. As further described below with reference to Fig. 2, an operating system layer (205) may be provided in the open architecture of the disclosed robot controller as a way to ensure an efficient task execution, particularly in terms of time, while meeting the appropriate synchronization aspects.

In some embodiments, the employed operating systems may correspond to so-called real-time operating systems (RTOS). RTOS's ensure determinism and predictability (in the sense of, given certain starting conditions, the result is always the same) apart from a series of common characteristics of different systems employed in sensitive, secure or dangerous applications, such as those that require of a precise synchronization for the assembly of industrial parts or those that refer to interactions of robots with the real world. All these applications may require a deterministic response in order to avoid accidents or uncontrolled situations.

In coordination with said RTOS, a framework for managing robotic resources or robotic middleware may be employed. Said framework may be configured to run on said RTOS and to employ resources that the RTOS provides, for example the communications, libraries for mathematical operations, the file system, memory management, etc.

Additionally, a co-processor (102) may be provided to manage safety-related aspects. Said co-processor (102) may take the form of a dedicated microprocessor or any kind of system in chip (SiC), for example a PLC in chip. In some embodiments, safety-related instructions may be executed in the co-processor (102) to manage a switch (110), for example in the form of a relay plugged in-between the main power connector of the board and the connector that powers the robot, so that actions such as emergency stops may be operated straight away by means of this dedicated co-processor (102).

On the other hand, by means of a series of input/output connections (I/Os) (116), the co-processor may detect the safety signals and use safety routines managed by the processor (101) that may not require an emergency stop but another measure such as reduce speed, bring the robot to a safety position, apply special torque force, etc.

These I/Os managed by the co-processor (102) may be checked through a dual channel signal check. In addition, both signals may be in turn checked individually in order to discard failures or false positives.

Power supply connectors (109) may receive up to 48V from an external source and the received voltage be distributed by a power module (111). In some embodiments, said power module may feature some characteristics of a power management integrated circuit (PMIC). Additionally, low-dropout (LDO) regulators (112) may transform the 48V power supply into a plurality of supplementary lower power (e.g. 5V, 3.3V, 2.5V, 1.8V, etc.) to feed the different electronics of the motherboard (100) accordingly.

A cryptoprocessor (113) may be incorporated in the controller to ensure different security-related aspects. In some embodiments, the cryptoprocessor may store a public-private pair of keys and generate certificate signing requests (CSRs) to a certification authority for the provision of a signed public key to be employed by the processor (101) of the controller in the encrypted, secure communications with the robotic system.

As further described with reference to Fig. 2, communication ports (114) according to a specific communication protocol employed in the robotic system may be provided ad hoc in the design of the motherboard (100). In some embodiments, Gigabit Ethernet RJ45 connectors (311, 321) for TSN Ethernet communications may be provided, however, other examples of communication protocols may include Profibus or CAN connectors, among others. External communications (e.g. with an external PC or server, Internet connection, etc.) may be also provided through one or more additional connectors.

A wireless communication module (115) may comprise a chip or integrated circuit by which digital signals coming from the processors (101, 102) may be switched into radiofrequency signals and transmitted to other devices by means of an antenna. Typical wireless communication protocols that may be implemented are: 6LoWPAN, Bluetooth Low Energy (BLE), Zigbee and Wi-Fi. Generally, wireless communications may be restricted to applications that cannot be implemented with deterministic data transmissions typically required in robotics, but that may be useful depending on the feature they might bring to the system where it is integrated (e.g. presence detectors for safety-related purposes).

An additional advantageous aspect of the disclosed robot controller is its open architecture, which makes it suitable for being configured as control system of a plurality of robot types, regardless of the specific manufacturer. In some embodiments, as schematically represented in Fig. 2, this open architecture may be provided through varied software implementations intended for corresponding hardware implementations in accordance with a multilayered architecture comprising: an application layer (201), a robot abstraction layer (202), a robot middleware layer (203), a communication protocol software adapter layer (204), an operating system layer (205) and a communication protocol hardware adapter layer (206). The following paragraphs are an excerpt of the general features for an open robot architecture disclosed in patent application PCT/ES2018/070596.

According to the exemplary embodiment illustrated in Fig. 2, the robot abstraction layer (202) may be configured according to a typology of a robot (e.g. a 6-axis or DoF robotic arm manipulator) and furnished with a set of device drivers to control the actions of such, whereas the communication protocol software adapter layer (205) may implement at least one communication protocol (e.g. MODBUS, CAN, EtherCAT, Ethernet, TSN, Profinet, Profibus, DeviceNet or Ethernet/IP, among others), according to the connection interface provided in the lower hardware layer (e.g. Gigabit Ethernet RJ45 connectors for TSN Ethernet) (206).

This way, thanks to a set of identical primitives shared in subgroups of robot types (e.g. 6DoF), basic control of different devices may be allowed in the application layer (201), thereby most cumbersome integration tasks are avoided while most proprietary aspects of each class of robot (e.g. MARA, UR, ABB, etc.) may be provided through control drivers of the manufacturer or programmed by abstracting some features of the application programming interfaces of the proprietary software of the device under consideration (e.g. predefined routines to move servomotors).

For its part, in the robot middleware layer (203), which may in turn be an exchange layer with information exchange logic between robot applications, preferably in the form of robotic frameworks such as ROS 2 or UPC UA, information of the packets transmitted through the physical layers may be extracted and re-packaged with corresponding headers accepted by said framework. Accordingly, in the operating system layer (205), a background Real Time Operating System (RTOS) such as Linux may be employed, once needed communication protocols are implemented, to manage associated hardware resources, as described.

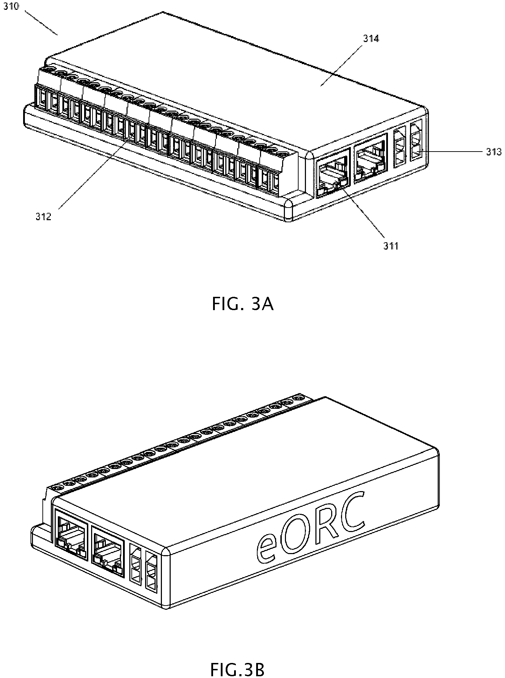

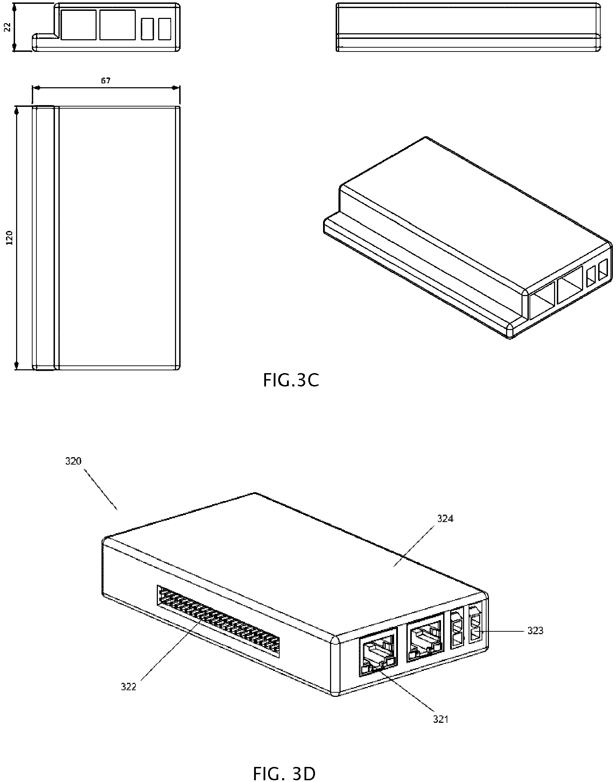

Additionally, Figs. 3A to 3F provide different perspectives of two exemplary designs of an embedded open robot controller (eORC), according to different embodiments disclosed herein. For example, Figs. 3A and 3B are a 3D representation of an eORC (310) that may be characterized by comprising Ethernet ports (311), PCB connectors (312) in the form of a PCB terminal block, power connectors (313) and a cover or casing (314) that may be made of aluminum and filled with thermal paste inside so that it acts as heat dissipater to avoid overheating of the controller. As represented by means of Fig. 3C, this small robot controller may feature following dimensions: 22 x 120 x 67 (height, width, depth) mm.

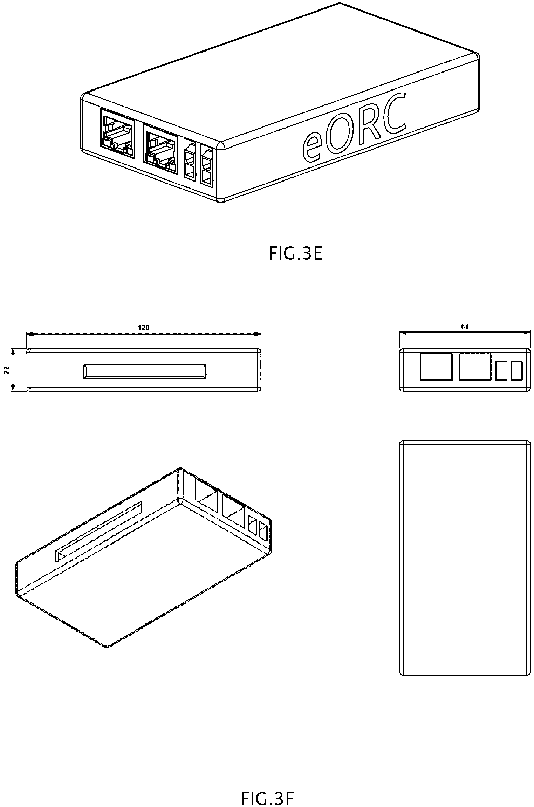

According to Figs. 3D and 3E, a second exemplary version of the eORC (320) may feature Ethernet ports (321) electrical connectors in the form of a plurality of pin headers (322), power connectors (323) and aluminum cover (314) filled with thermal paste, as described before. Likewise, it dimensions, as represented in Fig. 3F, may represent 22 x 120 x 67 mm, as aforementioned.

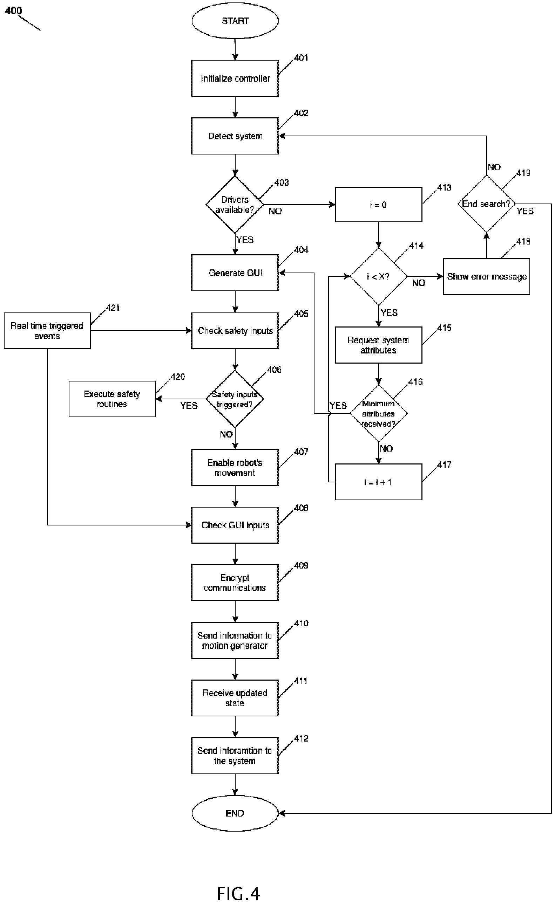

References are now made to Fig. 4, which provides a flow diagram of a method for controlling a robot, the method characterized by comprising the employment of the embedded open robot controller disclosed herein.

In a first aspect, the method may commence by initializing the controller (401) so that a series of computer instructions are executed in one or more processors to cause operations that may comprise a step of detecting the system (402) to which the controller is connected, for example through the communication ports (114).

To configure the control of the system (e.g. a robot) accordingly, the method may further comprise checking if there are drivers available for the system under consideration available in memory (403), whereas these drivers may provide information such as component ID, status, 3D model for simulation purposes, basic kinematics of the component (if applicable), etc.

If there are no drivers available, the program of the controller may be configured to set a variable "i" to "0" (413) and check if "i" is not greater than a variable "X" (414), being "X" a loop or predefined number of times that a request for robot attributes to the system may have to be made before stopping the process. As long as "i" is smaller than "X", the method may proceed to a step by which the controller requests a series of attributes to the system (415) in order to complete its drivers' database. In some embodiments, these attributes may be represented by information furnished according to the HRIM model, thereby facilitating the configuration of the robot.

After requesting the attributes, the processor (101) may be configured to check if a series of minimum attributes have been received (416). Minimum attributes may be compounded of those needed to reproduce basic actions aimed to control a robot, essentially those comprised in a robot abstraction layer (202) according to embodiments hereby disclosed. If minimum system attributes have been received, the method may continue with the generation of a user interface (404). If not, the controller may be configured to set the variable "i" to "i + 1" (417) and further check if i < X (414), as already described.

This loop process allows the system to stop checking when the value of the variable "i" is equal or greater than the number of times defined beforehand, so that an error message may be shown (418), for example through a user interface, and the system be configured or the user decide to finish the search of attributes (419). If affirmative, the method may end. If negative, the system may repeat the system detection (402), as described above.

As further represented in Fig. 4, the method may continue with the generation of a user interface (404) that provides a graphical representation of the system to be controlled and allows an interactive handling of such, whereas different methods for a dynamic generation and update of the GUI may be employed therein, as disclosed in patent application EP18382803.7.

In some embodiments, the program of the GUI may be stored in memory (103) in the form of a browser (e.g. a hardware browser) that, when executed, displays the image of different hardware elements through a display device that may be connected to the system in any known way (e.g. through Ethernet connection). In other embodiments, the motherboard (100) may be furnished with an audio/video interface (not represented) through which image data is transmitted to a display device that may be connected directly to the controller. For example, an HDMI port may allow for the transmission of said image data.

Next step of the method may comprise checking safety inputs (405). Safety inputs may be received through I/O ports (116, 312, 322) and managed by a co-processor (102), as disclosed herein. If checked that a series of system inputs have been triggered (406), certain safety routines may be executed (420). Examples of such safety routines may comprise the safety stop due to an unexpected contact between the robot and other unknown body (e.g. through increase of current of motors or through torque and/or force sensors), the push of a safety switch or the activation of any other external safety device (e.g. light curtains, safety scanner, etc.).

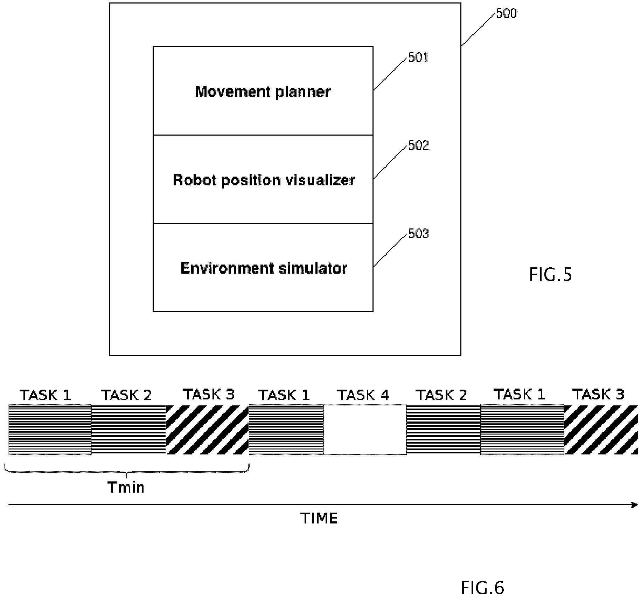

If no safety inputs exist, the system may be considered safe and the controller may enable robot's movements (407). At any rate, in order to grant that the system is continuously safe, some parallel real-time triggered events (421) may be performed. Some examples of such events are further represented in Fig. 6 and may comprise the check of safety inputs (405) and the check of inputs of the user interface (408), as schematically described in Fig. 4.

While continuously, real-time checking GUI inputs (408), the controller may process different movement instructions following, for example, a series of commands introduced by the user or the execution of a programmed routine. All communications and instructions derived from this may be encrypted (409) thanks to the employment of the public-private pair of keys contained in a cryptoprocessor (113).

Processed information may be sent to a motion generator (410) to be treated as described below by means of Fig. 5. Then, the information treated this way may be sent back to the controller, where an updated status (e.g. including motion planning) is received (411) and synchronized before final instructions are sent to the system (412), thereby allowing robot control.

As schematically represented in Fig. 5, a motion generation system (500) may comprise the execution of a set of plug-ins such as a movement planner (501), a robot position visualizer (502) and an environment simulator (503). The motion generation system (500) may be hosted in a local or remote server or PC, among others, connected to the robotic system and the robot controller, so that updates may be received in the controller (411) through a client configured to this end.

Likewise, the motion generation system (500) may be hosted in a plurality of network connected devices and be provided through a cloud or web-based service with which the controller is coordinated and in constant synchronization.

In some embodiments, the robot position visualizer plug-in (502) may be provided at a local level by configuring a dedicated client in the embedded robot controller. Said client may keep receiving constant visual updates from the motion generation system (500) and feeding the user interface with them (411).

The toolkit comprised in a motion generation system (500) may be powered by a set of plugins coordinated and synchronized in a way so as to provide a complete user experience. For example, the movement planner (501) may comprise a motion planning software such as Movelt!; the robot position visualizer (502) may be supported by a software like 'rviz'; whereas the robot environment simulator (503) may include the employment of tools such as Gazebo. Through Internet connection provided through communication ports (114), the user interface run by the controller may get always refreshed with input from the motion generation system (500).

In some embodiments, the robot controller may allow to handle the robot according to the preferences of the user by commanding the joints and motors directly through a user interface, without relying on a connection to the movement planner (501) (e.g. without Internet connection). However, in cases where inverse kinematics is needed (e.g. more complex routines), storage of a plurality of programs may be realized in memory after successive state updates (411), what may ultimately allow to manage the robot in total safety conditions, provided that same environment conditions are maintained (e.g. no new obstacles have been added). In some embodiments, however, a set of sensors monitoring surrounding conditions may keep transmitting updates to the robot controller, what allows to secure safety conditions even without Internet connection.

Finally, references are made to Fig. 6, which provides a schematic representation of a series of cyclical routines employing real-time capabilities that may be executed in the controller. The rationale of saving certain computing capacities of the one or more processors of the controller is to guarantee the execution of certain critical tasks within responsivity standards that are basic in modern robotics.

As schematically depicted in Fig. 6, the processor may contain a series of instructions to work in the execution of certain tasks (TASK1, TASK2...) during a given period of time (TIME). Among these tasks may be highlighted the check of safety inputs and the check of GUI inputs (421, 405, 408) or the management of security routines through the employment, for example, of some of the advantages provided by the TSN protocol (e.g. class prioritization, class of service, etc.).

Additionally, it is represented the amount of cycles required (Tmin) to assure the repeatability of certain critical task (e.g. check safety inputs), so that the time elapsed between the execution of the same task does not exceed certain threshold.

## Claims

1. An embedded robot controller **characterized by** comprising a motherboard (100), wherein at least following electronics are included: a processor (101), a co-processor (102), RAM memory chips (103), a Flash memory chip (104), a BIOS battery (105), a BIOS configuration EEPROM (106), a boot memory (107), a real-time clock (108), power supply connectors (109), a switch (110), a power module (111), low-dropout regulators (112), a cryptoprocessor (113), communication ports (114), a wireless module (115) and input/output connections (116); being said controller **characterized in that** a multilayered configuration is implemented, said configuration comprising an application layer (201), a robot abstraction layer (202), a robot middleware layer (203), a communication protocol software adapter layer (204), an operating system layer (205) and a communication protocol hardware adapter layer (206).

2. An embedded robot controller according to claim 1, wherein the co-processor (102) is connected to the input/output connections (116) to detect safety signals that trigger the execution of safety routines in the processor (101).

3. An embedded robot controller according to claims 1 and 2, wherein the processor (101) comprises a dedicated interruption pin managed by the co-processor (102) to run a safety stop routine by acting on the switch (110) as soon as the co-processor (102) triggers a safety stop request.

4. An embedded robot controller according to claim 1, wherein the cryptoprocessor (113) stores a public-private pair of keys and is configured to generate certificate signing requests (CSRs) to a certification authority for the provision of a signed public key to be employed by the processor (101) in encrypted, secure communications with the robot.

5. An embedded robot controller according to claim 1, wherein the motherboard (100) and rest of electronics are comprised in a 22 x 120 x 67 mm aluminum casing (314, 324) filled with thermal paste; said casing allowing access to communication ports (114, 311, 321), input/output connections (116, 312, 322) and power supply connectors (109, 313, 323).

6. An embedded open robot controller according to claims 1 and 5, wherein the input/output connections (116) are connectors selected from: PCB connectors in the form of a PCB terminal block (312) and electrical connectors in the form of a plurality of pin headers (322).

7. An embedded robot controller according to any of the previous claims, wherein the communication protocol hardware adapter layer (206) is linked to a connection interface (114) suited for the robot.

8. An embedded robot controller according to any of the previous claims, wherein the communication protocol software adapter layer (204) comprises at least one communication protocol selected from: MODBUS, CAN, EtherCAT, Ethernet, TSN, Profinet, Profibus, DeviceNet and Ethernet/IP.

9. An embedded robot controller according to any of the previous claims, wherein the robot abstraction layer (202) is configured with a topology of a robot and comprises a set of device drivers.

10. A method for controlling a robot, the method **characterized by** comprising the employment of the embedded open robot controller of claims 1 to 9; wherein computer instructions are executed in one or more processors of the controller to cause operations comprising: initializing the controller (401); detecting a robotic system comprising a robot (402); checking the availability of drivers (403); generating a graphical user interface (404); checking safety inputs (405); executing safety routines (420) when checked that safety inputs have been triggered (406); enabling robot's movement (407); checking user interface inputs (408); encrypting communications (409); sending information of movements to a motion generator system (410); receiving from the motion generator an updated state (411); and sending information to the robotic system (412) to enable control of the robot.

11. A method for controlling a robot according to claim 10, wherein the check of safety inputs (406) and the check of graphical user interface inputs (408) are a series of real-time triggered events (421) executed in a dedicated thread in the operations of one or more processors of the controller.

12. A method for controlling a robot according to claims 10 and 11, wherein the real-time triggered events are executed in a TSN network.

13. A method for controlling a robot according to claim 10, wherein the non-availability of drivers (403) triggers operations comprising: setting a "i" variable to "0" (413); checking if "i" is smaller than "X" (414); if "i < X", requesting system attributes (415) and checking if minimum attributes have been received (416); if minimum attributes have not been received, setting the "i" variable to "i = i + 1" (417) and checking if "i < X" again (414); if "i" is not smaller than "X", showing an error message (418) and verifying if the search is programmed to end (419), wherein the system is detected again (402) if the search is not programmed to end.

14. A method for controlling a robot according to claim 10, wherein the employed motion generator system (500) is a plug-in toolkit comprising a movement planner (501), a robot position visualizer (502) and an environment simulator (503); said motion generation system (500) executed in a local or remote server or PC connected to the robotic system and the robot controller, or hosted in a plurality of network connected and provided through a cloud or web-based service with which the controller is coordinated and in constant synchronization.

15. A method for controlling a robot according to claims 10 and 14, wherein the robot position visualizer plug-in (502) is executed by configuring a client in the robot controller to receive constant visual updates from the motion generation system (500) and provide the user interface with said updates.
